(19) Europäisches Patentamt
European Patent Office
Office européen des brevets

(11) EP 0 668 315 B1

(12) **EUROPÄISCHE PATENTSCHRIFT**

(45) Veröffentlichungstag und Bekanntmachung des Hinweises auf die Patenterteilung:
**20.08.1997 Patentblatt 1997/34**

(51) Int Cl.⁶: **C08K 13/00**, C08L 83/04

(21) Anmeldenummer: **95100676.6**

(22) Anmeldetag: **19.01.1995**

(54) **Hitzestabilisierte, zu Elastomeren vernetzbare Organopolysiloxanmassen**

Heat-stabilized curable elastomeric organo-polysiloxane compositions

Compositions d'organo-polysiloxanes réticulables en élastomères stabilisées à la chaleur

(84) Benannte Vertragsstaaten:
**BE DE ES FR GB IT NL**

(30) Priorität: **20.01.1994 DE 4401606**

(43) Veröffentlichungstag der Anmeldung:
**23.08.1995 Patentblatt 1995/34**

(73) Patentinhaber: **Wacker-Chemie GmbH**
**81737 München (DE)**

(72) Erfinder:
• **Funk, Enno, Dr.**
**D-84489 Burghausen (DE)**

• **Egerter, Norbert**
**D-84561 Mehring (DE)**
• **Schreyer, Sabine**
**D-84489 Burghausen (DE)**
• **Achenbach, Frank, Dr.**
**D-84359 Simbach (DE)**
• **Barthel, Herbert, Dr.**
**D-84547 Emmerting (DE)**

(56) Entgegenhaltungen:
**EP-A- 0 033 843          EP-A- 0 049 980**
**DE-A- 2 543 849          US-A- 4 528 313**

**Beschreibung**

Die Erfindung betrifft zu Elastomeren vernetzbare Organopolysiloxanmassen, welche als Hitzestabilisator Kupfer- und Zinkverbindungen sowie gegebenenfalls Fettsäure enthalten, sowie ein Verfahren zur Herstellung dieser Massen.

Silicone nehmen unter den Elastomeren eine Sonderstellung ein, da sich ihre mechanischen Kenndaten und allgemein ihre physikalischen Eigenschaften mit der Temperatur nur wenig ändern. In einzigartiger Weise verbinden sich extreme Kälteflexibilität auf der einen mit ausgezeichneter Heißluftbeständigkeit auf der anderen Seite. Bei hohen Temperaturen, etwa ab 180°C, unterliegen jedoch auch Silicone einer merklichen Hitzealterung, die bei Siliconelastomeren zu einer Veränderung der mechanischen Eigenschaften, wie z.B. Shorehärte, Reißfestigkeit und Reißdehnung führt. Die Ursachen sind u. a. in oxidativen Prozessen, thermischer Kettenspaltung sowie Reorganisation des Siloxannetzwerkes unter dem katalytischen Einfluß inhärenter Verunreinigungen, oft im Zusammenhang mit unvermeidbaren Wasserspuren zu suchen. Ferner können beispielsweise Dimethylsiloxanketten mit endständigen Siloxanolgruppen unter Abspaltung niedermolekularer Cyclen thermisch abgebaut werden.

Die Heißluftalterung von Siliconvulkanisaten wird im allgemeinen rein qualitativ in einer mit Temperatur und Zeit zunehmenden Versprödung des Materials offenbart, was mit einem zunehmenden Verlust der Elastizität verbunden ist.

Seit längerem wird der thermische und oxidative Abbau von Siliconen und deren Stabilisierung durch geeignete Additive untersucht, wobei Übergangsmetalle und deren Verbindungen von Anfang an eine herausragende Bedeutung hatten. Hierzu sei z.B. auf J. M. Nielsen: "Oxidative Stabilization of Silicone Fluids" in: "Advances in Chemistry Series 85 (Stabilization of Polymers and Stabilizer Processes)", Ed. R. F. Gould, American Chemical Society, Washington D. C. 1968 verwiesen. Als Hitzestabilisatoren für Silicongummi werden am häufigsten Verbindungen der Lanthanide, insbesondere Cer, aber auch Verbindungen des Eisens, Zirkoniums und Titans angewandt, bevorzugt die 2-Ethylhexanoate, Chloride, Oxide und Siloxanolate.

Kupferverbindungen als Hitzestabilisatoren von Siliconelastomeren, wie beispielsweise Bis-(ethylendiamin)-kupfer(II)sulfat gemäß US-A 4,777,087 (Xerox Corp., ausgegeben am 11. Oktober 1988) oder Kupfersalze von Carbonsäuren, wie Kupfer(II)-2-ethylhexanoat, gemäß US-A 2,999,076 (Dow Corning Corp., ausgegeben am 05. September 1961), sind bereits beschrieben worden. Bezogen auf 100 Teile Organopolysiloxan werden dabei 1 bis 20 Teile des Kupfer-Ethylendiamin-Komplexes bzw. 0,001 bis 0,40 Teile Kupfer als Carboxylat (entsprechend 10 bis 4 000 ppm Cu) angewandt. In DE-C 27 52 097 (Sustova et al., ausgegeben am 1. April 1982) wird ein Verfahren zur Stabilisierung von Polymeren gegen den thermischoxidativen Abbau durch Vermischen der Polymere mit einem Formiat eines Metalls wechselnder Wertigkeit, u. a. Kupfer, beschrieben, wobei die Salze in Mengen von 0,1 bis 20 Gewichtsteilen je 100 Gewichtsteile Polymer zugegeben werden. Es wird wiederum darauf verwiesen, daß weniger als 0,1 Gewichtsteile Salz pro 100 Gewichtsteile Polymer zu einem unbedeutenden Stabilisierungseffekt führen.

In US-A 3,435,000 (General Electric Comp., ausgegeben am 25. März 1969) und US-A 5,086,107 (Shin-Etsu Chemical Co., ausgegeben am 04. Februar 1992) wird Zink als Carbonat oder Hydroxid zur Verbesserung der ölbeständigkeit von Siliconelastomeren beschrieben.

2-Ethylhexansäure ist gewöhnlich als Gegenion Bestandteil hitzestabilisierender Übergangsmetallverbindungen, wurde jedoch auch zusätzlich zu Acetylacetonaten von Eisen, Nickel und Cer, nicht jedoch von Kupfer, angewandt. Hierzu sei z.B. auf US-A 4,528,313 (Dow Corning Corp., ausgegeben am 09. Juli 1985) verwiesen.

Kupfer und Zink als Hitzestabilisatoren werden in US-A 4,824,903 (Dow Corning K.K., ausgegeben am 25. April 1989) offenbart. Einzeln oder nebeneinander werden sie in Form ihrer Oxide, Phosphate, Silikate, Carbonate und Sulfate in Mengen von 10 bis 90 % zusammen mit acrylierten Siliconharzen als Bestandteilen von Isolierüberzügen von Elektroblechen beansprucht. Hierzu sei z.B. auf DE-B 26 07 185 (Nippon Steel Corp., ausgegeben am 22. Dezember 1977) verwiesen. Kupferundecylenat und Zinkacetylacetonat werden u. a. auch als Hitzestabilisatoren für UV-härtbare Acrylamid-Polysiloxan-Zusammensetzungen in Mengen von 1 Gew.% verwendet. Hierzu sei z.B. auf US-A 5,246,979 (Dow Corning Corp., ausgegeben am 21. September 1993) bzw. die entsprechenden EP 518 142 A1 verwiesen.

In DE-B 25 43 849 (M.P. Grinblat et al., ausgegeben am 14. April 1977) wird der Einsatz von Kupfersilikat, -sulfid, -borat oder -phosphid in einer Menge von 0,2 bis 50 Gewichtsteilen auf 100 Gewichtsteile Organopolysiloxan zur Thermostabilisierung von (HTV-)Organopolysiloxanmassen beschrieben. Die genannten Kupfersalze werden dabei in Kombination mit Metalloxiden, wie z.B. 2 bis 10 Gewichtsteilen Zinkoxid auf 100 Gewichtsteile Siliconkautschuk - zur Verbesserung der Beständigkeit der Vulkanisate gegen Abbau unter Bedingungen mit begrenztem Luftzutritt - eingesetzt, wobei darauf verwiesen wird, daß weniger als 0,2 Gewichtsteile Kupfersalz und 2 Gewichtsteile Zinkoxid nicht zu den gewünschten Verbesserungen führen.

Im folgenden soll der Begriff Organopolysiloxane im Rahmen dieser Erfindung auch oligomere Siloxane mitumfassen.

Gegenstand der Erfindung sind hitzestabilisierte, zu Elastomeren vernetzbare Organopolysiloxanmassen, die als satorkombination

(D) Kupferverbindung in einer Menge von 1 bis 180 Gew.-ppm berechnet als elementares Kupfer und

(E) Zinkverbindung in einer Menge von 1 bis 180 Gew.-ppm berechnet als elementares Zink, jeweils bezogen auf das Gesamtgewicht der hitzestabilisierten, zu Elastomeren vernetzbaren Organopolysiloxanmasse,

sowie gegebenenfalls

(F) organische Fettsäure

enthalten.

Sofern im folgenden die Bezeichnungen Kupfer und Zink gewählt werden, beziehen sie sich nicht auf die duktilen Metalle, sondern werden der Einfachheit halber für Verbindungen oder ionische Spezies dieser Metalle verwendet.

Bei den mit der erfindungsgemäßen Kupfer/Zink-Stabilisatorkombination zu stabilisierenden Massen kann es sich um beliebige, zu Elastomeren vernetzbare Organopolysiloxanmassen handeln, wie beispielsweise einkomponentige oder zweikomponentige bei Raumtemperatur (sog. RTV-Massen) oder erhöhter Temperatur (sog. HTV-Massen) vulkanisierende Organopolysiloxanmassen, wobei die Vernetzung durch Kondensation, Addition von Si-gebundenem Wasserstoff an aliphatische Mehrfachbindung oder peroxidisch durch Bildung von Radikalen erfolgen kann. Vorzugsweise handelt es sich bei den mit der erfindungsgemäßen Kupfer/Zink-Stabilisatorkombination zu stabilisierenden Massen um einkomponentige, peroxidisch vernetzbare Organopolysiloxanmassen.

Die erfindungsgemäßen hitzestabilisierten, zu Elastomeren vernetzbaren Organopolysiloxanmassen enthalten vorzugsweise

(A) Organopolysiloxane aus Einheiten der allgemeinen Formel

$$R_a SiO_{\frac{4-a}{2}} \qquad (I),$$

worin

R   gleich oder verschieden sein kann und gegebenenfalls substituierter Kohlenwasserstoffrest bedeutet und

a   0, 1, 2 oder 3 ist und einen durchschnittlichen Zahlenwert von 1,9 bis 2,1 hat,

(B) gegebenenfalls verstärkende und/oder nichtverstärkende Füllstoffe,

(C) die Vernetzung der Organopolysiloxanmassen fördernden Katalysator bzw. die Vernetzung bewirkendes Agens, wie beispielsweise organisches Peroxid,

(D) Kupferverbindung in einer Menge von 1 bis 180 Gew.-ppm berechnet als elementares Kupfer und bezogen auf das Gesamtgewicht der hitzestabilisierten, zu Elastomeren vernetzbaren Organopolysiloxanmasse,

(E) Zinkverbindung in einer Menge von 1 bis 180 Gew.-ppm berechnet als elementares Zink und bezogen auf das Gesamtgewicht der hitzestabilisierten, zu Elastomeren vernetzbaren Organopolysiloxanmasse und

(F) gegebenenfalls organische Fettsäure.

Beispiele für gegebenenfalls substituierte Kohlenwasserstoffreste R sind Alkylreste, wie Methyl-, Ethyl-, Propyl-, Isopropyl-, tert.-Butyl-, n-Octyl-, 2-Ethylhexyl- und Octadecylrest; Alkenylreste, wie Vinyl-, Allyl-, Hexenyl- und Undecenylrest; Cycloalkylreste, wie Cyclopentyl- oder Cyclohexylrest; Cycloalkenylreste, wie Cyclopentenyl- oder Cyclohexenylrest; Arylreste, wie Phenyl-, Tolyl-, Xylyl- oder Naphthylrest; Aralkylreste, wie Benzyl- oder Phenylethylrest, sowie halogenierte oder mit funktionellen organischen Gruppen substituierte Reste, wie 3,3,3-Trifluorpropyl- oder Cyanomethylrest.

Bevorzugte Reste R sind Methyl-, Vinyl-, Phenyl- und 3,3,3-Trifluorpropylrest.

Vorzugsweise sind an mindestens 70 Mol% der in dem Organopolysiloxan aus Einheiten der Formel (I) enthaltenen Si-Atome Alkylreste, insbesondere Methylreste, gebunden. Enthalten die Organopolysiloxane (A) neben Si-gebundenen Methyl- und/oder 3,3,3-Trifluorpropylresten noch Si-gebundene Vinyl- und/oder Phenylreste, so handelt es sich bei letzteren bevorzugt um Mengen von 0,001 - 30 Mol%.

Es können aber auch Organopolysiloxane (A) eingesetzt werden, bei denen bis zu 50 Mol-% der Reste R Wasserstoffatom bedeuten.

Vorzugsweise bestehen die Organopolysiloxane (A) überwiegend aus Diorganosiloxaneinheiten. Die Endgruppen der Organopolysiloxane (A) können Trialkylsiloxygruppen, insbesondere der Trimethylsiloxyrest oder der Dimethylvinylsiloxyrest, sein; es können aber auch ein oder mehrere dieser Alkylgruppen durch Wasserstoff, Hydroxygruppen oder Alkoxygruppen, wie Methoxy- oder Ethoxyreste, ersetzt sein.

Bei den Organopolysiloxanen (A) kann es sich um Flüssigkeiten oder hochviskose Substanzen handeln. Vorzugsweise weisen die Organopolysiloxane (A) eine Viskosität zwischen 100 mPa·s und 100 000 Pa·s auf, welche vorzugsweise mit einem Brookfield-Viskosimeter gemessen wird.

Bei den Organopolysiloxanen (A) kann es sich um eine Art von Organopolysiloxan handeln wie auch um mindestens zwei verschiedene Arten derartiger Siloxane handeln.

Bevorzugt handelt es sich bei den organischen Fettsäuren (F) um 2-Ethylhexansäure, Undecansäure, 10-Undecensäure, Palmitinsäure, Stearinsäure und Naphthensäuren, wobei 2-Ethylhexansäure besonders bevorzugt ist.

Die erfindungsgemäßen Organopolysiloxanmassen enthalten organische Fettsäure (F) vorzugsweise in Mengen von 0 bis 300 Gew.-ppm (Gewichtsteilen je Million Gewichtsteilen), besonders bevorzugt von 50 bis 150 Gew.-ppm, jeweils bezogen auf das Gesamtgewicht der erfindungsgemäßen hitzestabilisierten, zu Elastomeren vernetzbaren Organopolysiloxanmasse.

Bei den organischen Fettsäuren (F) kann es sich um eine Art von organischer Fettsäure wie auch um mindestens zwei verschiedene Arten derartiger Fettsäuren handeln.

Als Füllstoffe (B) können alle Füllstoffe eingesetzt werden, die auch bisher in zu Elastomeren vernetzbaren Organopolysiloxanmassen eingesetzt wurden, wobei pyrogene oder gefällte Kieselsäuren mit BET-Oberflächen von mindestens 50 m²/g bevorzugt sind.

Beispiele für verstärkende Füllstoffe sind pyrogene oder gefällte Kieselsäuren mit BET-Oberflächen von mindestens 50 m²/g sowie Furnace-Ruß und Acetylen-Ruß.

Die genannten Kieselsäurefüllstoffe können hydrophilen Charakter haben oder nach bekannten Verfahren hydrophobiert sein. Hierzu sei beispielsweise auf DE 38 39 900 A (Wacker-Chemie GmbH; angemeldet am 25.11.1988) verwiesen. Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Organopolysiloxanmasse, wobei diese Reagenzien vorteilhafterweise in einer geeigneten Mischvorrichtung, wie z.B. Kneter oder Innenmischer, zum bereits vorgelegten Organopolysiloxan gegeben werden, bevor die hydrophile Kieselsäure sukzessive in die Masse eingearbeitet wird.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips, sowie Kunststoffpulver, wie Polyacrylnitrilpulver oder Polytetrafluorethylenpulver. Des weiteren können als Füllstoffe faserige Komponenten, wie Glasfasern und Kunststoffasern, eingesetzt werden. Die BET-Oberfläche dieser Füllstoffe liegt vorzugsweise unter 50 m²/g.

Wird Zirkoniumsilicat als Füllstoff (B) verwendet, ist ein Gehalt an organischer Fettsäure, insbesondere 2-Ethylhexansäure, von 200 bis 300 Gew.-ppm, bezogen auf das Gesamtgewicht der erfindungsgemäßen, zu Elastomeren vernetzenden Masse, besonders bevorzugt.

Bei den Füllstoffen (B) kann es sich um eine Art von Füllstoff wie auch um mindestens zwei verschiedene Arten derartiger Füllstoffe handeln.

Die erfindungsgemäßen, zu Elastomeren vernetzbaren Organopolysiloxanmassen enthalten Füllstoff (B) in Mengen von vorzugsweise 0 bis 200 Gewichtsteilen, besonders bevorzugt 30 bis 100 Gewichtsteilen, jeweils bezogen auf 100 Gewichtsteile Organopolysiloxan (A).

Bei der Komponente (C) kann es sich um Vernetzungskatalysatoren bzw. allgemein ein die Vernetzung initiierendes oder bewirkendes Agens handeln, welches auch bisher in zu Elastomeren vernetzbaren Massen eingesetzt wurde. Die einzusetzenden Katalysatoren oder Agenzien (C) hängen vom Vernetzungssystem ab. So werden einkomponentige Silicon-Heißkautschuke (HTV-Kautschuke) bevorzugt peroxidisch bei Temperaturen oberhalb 100°C vernetzt, während additionsvernetzende, zweikomponentige HTV- und RTV-Kautschuke dagegen vorzugsweise mittels eines Edelmetallkatalysators auf Basis eines Metalls der 8. Nebengruppe vernetzt werden, wobei hierbei Platin und dessen Verbindungen als Katalysatoren bevorzugt werden.

Zweikomponentige kondensationsvernetzende RTV-Siliconkautschuke vulkanisieren vorzugsweise unter dem katalytischen Einfluß von Zinn(IV)-Verbindungen, während einkomponentige RTV-Massen unter dem Einfluß von Luftfeuchtigkeit von der Oberfläche her durchvulkanisieren.

Vorzugsweise werden als Komponente (C) bei den erfindungsgemäßen Organopolysiloxanmassen Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und Dicumylperoxid bevorzugt sind.

Die erfindungsgemäßen zu Elastomeren vernetzbaren Organopolysiloxanmassen enthalten Peroxid (C) in Mengen von vorzugsweise 0,4 bis 2,0 Gewichtsprozent, besonders bevorzugt 0,7 bis 1,5 Gewichtsprozent, jeweils bezogen auf das Gesamtgewicht der Organopolysiloxanmasse.

Beispiele für die Kupferkomponente (D) sind anorganische Kupfersalze, wie $CuCl_2$ und $CuSO_4$, sowie Fettsäuresalze von Kupfer, wie z.B. Salz von 2-Ethylhexansäure.

Beispiele für die Zinkkomponente (E) sind anorganische Zinksalze, wie $ZnCl_2$ und $ZnSO_4$, sowie Fettsäuresalze von Zink, wie z.B. Salz von 2-Ethylhexansäure.

Kupferkomponente (D) bzw. Zinkkomponente (E) kann jeweils als anorganisches Salz in reiner Form sowie besonders bevorzugt als wäßrige Lösung eingesetzt werden.

Vorzugsweise werden Fettsäuresalze von Kupfer bzw. Zink jeweils in reiner Form oder in inertem, bevorzugt unpolaren organischen Lösungsmittel, wie z.B. aliphatischen oder aromatischen Kohlenwasserstoffen, gelöst eingesetzt.

Als vorteilhaft hat es sich gezeigt, Zink und Kupfer in Form von metalldotierter Kieselsäure gemäß der deutschen Anmeldung mit dem Aktenzeichen p 43 36 345.8 (Wacker-Chemie GmbH; angemeldet am 25. Oktober 1993) einzusetzen. Die metalldotierte Kieselsäure wird dabei nach einem Verfahren hergestellt, bei dem hydrophile Kieselsäure mit

a) einer flüssigen oder in Wasser oder einem organischen Lösungsmittel gelösten übergangsmetallverbindung und
b) einem organischen oder siliciumorganischen Hydrophobierungsmittel

vermischt wird.

Falls als Komponenten (D) und (E) mit Kupfer und Zink dotierte Kieselsäure eingesetzt wird, kann sich die Menge an eingesetztem Füllstoff (B) entsprechend verringern bzw. kann auf Zusatz von Füllstoff (B) verzichtet werden.

Die nach der genannten deutschen Anmeldung mit dem Aktenzeichen P 43 36 345.8 mit Kupfer und Zink dotierte Kieselsäure kann auch mit metallfreier pyrogener oder gefällter Kieselsäure, welche jeweils hydrophil oder hydrophobiert sein kann, abgemischt werden, ohne daß die Hitzestabilität der damit hergestellten Siliconvulkanisate beeinträchtigt wird.

Bei Zusatz der beschriebenen, mit Kupfer und Zink dotierten Kieselsäure wird selbst ohne Zusatz von organischer Fettsäure eine hohe Hitzestabilität erzielt.

Bevorzugt wird als Komponenten (D) und (E) $CuCl_2$ und $ZnCl_2$ eingesetzt.

Die Komponenten (D) und (E) werden in solchen Mengen eingesetzt, daß die Konzentrationen an Kupfer und Zink jeweils unabhängig voneinander 1 bis 180 Gew.-ppm Kupfer bzw. Zink, bevorzugt 2 bis 90 Gew.-ppm Kupfer bzw. Zink, besonders bevorzugt 4 bis 40 Gew.-ppm Kupfer bzw. Zink, jeweils berechnet als elementares Kupfer bzw. elementares Zink und bezogen auf das Gesamtgewicht der erfindungsgemäßen hitzestabilisierten, zu Elastomeren vernetzbaren Organopolysiloxanmasse, beträgt.

Der jeweiligen Anwendung entsprechend können den erfindungsgemäßen hitzestabilisierten, zu Elastomeren vulkanisierbaren Organopolysiloxanmassen Verarbeitungshilfsmittel (G) sowie Zusatzstoffe (H), wie beispielsweise Pigmente und Konservierungsmittel, zugesetzt werden.

Darüberhinaus enthalten die erfindungsgemäßen Massen vorzugsweise keine weiteren Stoffe.

Die Herstellung der erfindungsgemäßen Organopolysiloxanmassen kann nach bekannten Verfahren erfolgen, wie beispielsweise durch einfaches Mischen der einzelnen Komponenten.

Vorzugsweise wird bei der Herstellung der erfindungsgemäßen Organopolysiloxanmassen auf Basis von Organopolysiloxanen (A) und hydrophiler Kieselsäure als verstärkendem Füllstoff (B) entsprechend dem Stand der Technik eine Füllstoff-Hydrophobierung beim Mischen des Füllstoffes mit dem Organopolysiloxan durch Zugabe eines Hydrophobierungsmittels in-situ durchgeführt, sofern der Füllstoff nicht schon zuvor separat hydrophobiert wurde, wie beispielsweise nach dem weiter oben zitierten Verfahren gemäß DE 38 39 900 A.

Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Organopolysiloxanmasse, (in-situ-Silazan-Verfahren), wobei diese Reagenzien in einer geeigneten Mischvorrichtung, wie z.B. Kneter oder Innenmischer, zum vorgelegten Organopolysiloxan (A) gegeben werden, bevor die hydrophile Kieselsäure sukzessive in die Masse eingearbeitet wird.

Nach dem erfindungsgemäßen Verfahren zur Herstellung hitzestabiler, zu Elastomeren vernetzbarer Organopolysiloxanmassen ist es nun besonders vorteilhaft, Metallkomponente (D) und (E) in Form löslicher Salze des Kupfers und des Zinks im Wasser des in-situ-Silazan-Verfahrens in die Kautschukmasse einzubringen.

Besonders bevorzugt wird zu Beginn des Mischprozesses noch eine organische Fettsäure (F) dem Organopolysiloxan (A) zugesetzt, gegebenenfalls gleichzeitig mit der wäßrigen Lösung der Kupfer- und Zinksalze.

Das erfindungsgemäße Verfahren hat den Vorteil, daß durch diese Arbeitsweise eine nahezu molekulardisperse oder feinkolloidale Verteilung der Metallverbindungen bzw. Metallionen im späteren Vulkanisat gewährleistet wird.

Zur verstrammungsfreien Einarbeitung hydrophiler Kieselsäure als vertärkendem Füllstoff (B) in das Organopolysiloxan (A) kann ferner die Kieselsäureoberfläche mit Verarbeitungshilfsmittel (G), wie etwa niederviskosem Polydimethylsiloxandiol, benetzt werden.

Die Viskositäten der Verarbeitungshilfsmittel (G) betragen bei 25°C vorzugsweise 10 bis 200 mPas, insbesondere 20 bis 150 mPas.

Verarbeitungshilfsmittel (G) wird in Mengen von vorzugsweise 0 bis 30 Gewichtsteilen, besonders bevorzugt 0 bis 20 Gewichtsteilen, jeweils bezogen auf 100 Gewichtsteile Organopolysiloxan (A), eingesetzt.

Als Verarbeitungshilfsmittel (G) können auch niederviskose Polydimethylsiloxandiole eingesetzt werden, in denen ein Teil der Si-gebundenen Methylgruppen durch Phenylgruppen oder Vinylgruppen ersetzt ist, wobei die Vinylgruppendichte über die Jodzahl (DIN 53 241) erfaßt wird. Die Jodzahl beträgt vorzugsweise 1 bis 75 g Jod pro 100 g Siloxandiol, insbesondere 7 bis 70 g Jod pro 100 g Siloxandiol. Die als Verarbeitungshilfsmittel eingesetzten Polydiorganosiloxandiole sowie deren Herstellung ist in der Silicon-Chemie allgemein bekannt.

Werden die erfindungsgemäßen Massen aus Organopolysiloxan (A), hydrophiler Kieselsäure als verstärkendem Füllstoff (B) und Verarbeitungshilfsmittel (G) ohne zusätzliches in-situ-Silazanverfahren hergestellt, kann nach einer anderen Verfahrensvariante die Kupferkomponente (D) und die Zinkkomponente (E) auch in Form der jeweiligen Fettsäuresalze des Kupfers und des Zinks eingesetzt werden, wobei diese wiederum vorteilhaft zu Beginn des Herstellungsverfahrens zugegeben werden.

Die Fettsäuresalze können dabei in reiner Form oder in Lösung eines inerten, vorzugsweise unpolaren Lösemittels, wie beispielsweise aliphatischen oder aromatischen Kohlenwasserstoffen vorliegen. Auch bei dieser Verfahrensweise ist ein Zusatz bzw. Überschuß von 50 bis 150 Gewichts-ppm Fettsäure, vorzugsweise 2-Ethylhexansäure, bezogen auf das Gesamtgewicht der erfindungsgemäßen hitzestabilisierten Organopolysiloxanmasse, besonders bevorzugt.

Weitere verstärkende Füllstoffe (B), wie beispielsweise Furnace-Ruß und Acetylen-Ruß, können in Mengen von 0 bis 60 Gewichtsteilen den Siliconmassen zugesetzt werden. Die erfindungsgemäß stabilisierten Siliconmassen können außerdem nichtverstärkende Füllstoffe enthalten, gegebenenfalls zusätzlich neben verstärkenden Füllstoffen.

Ein weiteres Verfahren zur Herstellung von erfindungsgemäß stabilisierten Siliconmassen besteht im Zumischen eines Aliquots eines Stabilisatorkonzentrats zu an sich unstabilisierten Organopolysiloxanmassen. Derartige Stabilisatorkonzentrate weisen in der Regel die gleiche oder eine ähnliche Zusammensetzung auf, wie die damit zu stabilisierenden Massen, enthalten jedoch keine Komponente (C), d.h. keinen Katalysator bzw. Agens, welches die Vulkanisation zu initiieren vermag. Der Gehalt an Kupfer bzw. Zink in einem derartigen Konzentrat ist primär nicht entscheidend; beispielsweise kann der Gehalt von Kupfer und Zink jeweils zwischen 500 und 5 000 Gewichts-ppm, bezogen auf die Konzentratgesamtmasse, und der Gehalt an Fettsäure zwischen 5 000 und 50 000 Gewichts-ppm, bezogen auf Konzentratgesamtmasse, betragen. Entscheidend für die zu erzielende hitzestabilisierende Wirkung ist aber der in die zu stabilisierende Organopolysiloxanmasse einzubringende Anteil des Konzentrats, so daß der dann resultierende Gehalt an Kupfer, Zink und Fettsäure innerhalb der erfindungsgemäßen Konzentrationsbereiche liegt.

Vorzugsweise wird der berechnete und abgemessene Teil des Kupfer und Zink enthaltenden Konzentrats der zu stabilisie-Organopolysiloxanmasse zu Beginn des Herstellungsverfahrens beigemischt, um eine möglichst vollständige Verteilung der Kupfer- bzw. Zinkkomponente in der Organopolysiloxanmasse zu gewährleisten.

Ein weiterer Gegenstand der vorliegenden Erfindung ist ein Stabilisatorkonzentrat, welches Kupferverbindung in einer Menge von mehr als 180 ppm berechnet als elementares Kupfer, Zinkverbindung in einer Menge von mehr als 180 ppm berechnet als elementares Zink, jeweils bezogen auf das Gesamtgewicht des Stabilisatorkonzentrats, Organopolysiloxan sowie gegebenenfalls weitere Stoffe enthält.

Die erfindungsgemäßen bzw. erfindungsgemäß hergestellten hitzestabilisierten Organopolysiloxanmassen können nun nach allgemein bekannten Verfahren vernetzen gelassen werden. Hierzu sei beispielsweise auf M. Wick, G. Kreis und F.-H. Kreuzer in: Ullmanns Encyclopädie der technischen Chemie, Weinheim 1982, oder J. C. Weis in: Progress of Rubber Technology, Ed. S. H. Morell, S. 85 - 106, Elsvier Applied Science Publishers, Ltd., England 1984, verwiesen.

Die erhaltenen Elastomere zeigen eine hohe Hitzestabilität.

Die erfindungsgemäßen hitzestabilisierten, zu Elastomeren vernetzbaren Organopolysiloxanmassen haben den Vorteil, daß der Zusatz von Kupfer und Zink gemeinsam und in überraschend niedriger Konzentration die Heißluftstabilität von Silicongummi stark erhöht, wobei dieser Effekt durch Zusatz organischer Fettsäuren noch erheblich verstärkt wird.

Die erfindungsgemäßen hitzestabilisierten, zu Elastomeren vernetzbaren Organopolysiloxanmassen haben des weiteren den Vorteil, daß sie aufgrund des sehr niedrigen Kupfer- und Zinkgehalts kaum eine Eigenfarbe besitzen und transparent sind, so daß - falls erwünscht - eine problemlose Einfärbung mit handelsüblichen Farbpasten, ohne die Eigenfarbe zugesetzter Pigmente zu verfälschen oder zu überdecken, ermöglicht wird.

Des weiteren haben die erfindunsgemäßen bzw. erfindungsgemäß hergestellten Siliconvulkanisate den Vorteil, daß sie aufgrund ihrer niedrigen Gehalte an Kupfer und Zink toxikologisch unbedenklich sind, was ihre technische Einsatzfähigkeit beträchtlich erweitert.

Die erfindungsgemäßen Organopolysiloxanmassen sowie die erfindungsgemäß daraus hergestellten Elastomere können für alle Zwecke eingesetzt werden, für die auch bisher zu Elastomeren vernetzbare Organopolysiloxanmassen bzw. Elastomere verwendet wurden. Insbesondere eignen sich die erfindungsgemäßen Organopolysiloxanmassen sowie die erfindungsgemäß daraus hergestellten Elastomere für Einsatzgebiete, in denen Hitzestabilität gefordert ist. Beispiele hierfür sind im Automobilbau: Dichtungen für Antriebswellen, Ölwannen, Kühlerdeckel, Schutzkappen für Zündkerzen, Verteiler, Zündspulen, gewebeverstärkte Schläuche für Heizungssysteme und Turbolader sowie Zündkabelisolierungen und Auspuffaufhängungen; in der Elektroindustrie: Kabelisolierungen für Elektro- und Mikrowellenherde, Grillgeräte, Bügeleisen sowie Kaffeeautomaten; im Lebensmittelbereich: Dichtungen für Backöfen, Thermoskannen und Sterilisationsschränke.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Vi bedeutet Vinylrest und

Me bedeutet Methylrest.

Die in den Tabellen verwendeten Abkürzungen haben folgende Bedeutung:

RF = Reißfestigkeit (DIN 53504)
M 100 % = Modul bei 100 % Dehnung
M 300 % = Modul bei 300 % Dehnung
RD = Reißdehung (DIN 53504)
WRW = Weiterreißwiderstand (ASTM D 624 B)
RPE = Rückprallelastizität (DIN 53512)
Gew.-Verl. = Gewichtsverlust bei Temperung bzw. Hitzelagerung
DVR = Druckverformungsrest (DIN 53517, 22 h 175°C)
Mooney = Mooney-Viskosität (Plastizität) (DIN 53523 L, 1 + 4)

**Beispiel 1**

Allgemeine Versuchsbeschreibung
auch für Beispiele 2 bis 6 und Vergleichsbeispiele 1 bis 6

Organopolysiloxan A ist ein hochmolekulares Polydimethylsiloxan der Formel $(Me_2ViSiO_{1/2})_2(Me_2SiO)_x(MeViSiO)_y$ mit x>>y, so daß im statistischen Mittel jedes 3200ste kettenständige Siliciumatom eine Vinylgruppe trägt, entsprechend einem Vinylgehalt von 0,03 Gew.% $CH=CH_2$. Aus dem Brabenderwert von 540 - 600 mkp ergibt sich eine mittlere Molmasse von etwa 450 000 g/mol.

Vernetzer C2 ist eine 50 %ige Suspension von Bis-(2,4-dichlorbenzoyl)-peroxid in Trimethylsilyl-endgestoppertem Polydimethylsiloxan der Viskosität 350 mm$^2$/s (käuflich erhältlich unter der Bezeichnung AK 350 bei der Wacker-Chemie GmbH).

Vernetzer C1 ist Dicumylperoxid.

Die Herstellung der Organosiloxanmasse erfolgt in Labor-Knetmaschinen der Fa. Werner und Pfleiderer, Stuttgart, Typ LUK 1,0 KS und LUK 2,5 KS. Die Knetschaufeln rotieren während des Mischprozesses mit 28 bzw. 42 Upm.

Zu 100 Teilen eines vorgelegten Organoplysiloxans A werden 2 Teile Wasser bzw. einer wäßrigen Lösung der Übergangsmetallsalze $CuCl_2·2\ H_2O$ und $ZnCl_2$ sowie z Teile 2-Ethylhexansäure gegeben und 5 Minuten bei einer Temperatur von 50°C eingearbeitet, wobei die Konzentrationen der Übergangsmetallsalze in der wäßrigen Lösung sowie z so gewählt werden, daß die in den nachfolgenden Tabellen angegebenen Konzentrationen an Kupfer, Zink und 2-Ethylhexansäure erzielt werden. Anschließend werden 7 Teile Hexamethyldisilazan zugesetzt und die Mischung während 20 Minuten bei 50°C homogenisiert. Sodann werden insgesamt 44,4 Teile pyrogen hergestellte Kieselsäure mit einer BET-Oberfläche von 300 m$^2$/g (käuflich erhältlich unter der Bezeichnung "HDK T 30" bei der Wacker-Chemie GmbH) in 6 bis 7 Portionen während jeweils etwa 5 Minuten sukzessive in die Mischung eingebracht.

Nach beendeter Zugabe wird innerhalb von 10 - 20 Minuten auf 150°C erhitzt und dann im Ölpumpenvakuum noch 3 Stunden bei dieser Temperatur geknetet. Nach dem Abkühlen wird die so erhaltene Organopolysiloxanmasse geteilt und auf einem Laborwalzwerk bei einer Friktion von 1:1,1 während jeweils 10 Minuten 1,5 % Vernetzer C2 bei Raumtemperatur in die eine Hälfte und 0,7 % Vernetzer C1 bei 45°C in die andere Hälfte eingearbeitet, wobei sich die Prozentangaben jeweils auf das Gesamtgewicht der Organopolysiloxanmasse bezieht.

Die beiden so erhaltenen, peroxidhaltigen Mischungen werden jeweils in Preßformen aus Edelstahl gefüllt und in Abhängigkeit vom Vernetzer entweder 10 Minuten bei 140°C (Vernetzer C2) oder 15 Min bei 170°C (Vernetzer C1) in einer Laborpresse vulkanisiert. Anschließend werden die Vulkanisate entformt und noch 4 Stunden bei 200°C im Umlufttrockenschrank mit einem Luftwechsel von etwa 100 Litern Luft pro kg Silicongummi und Minute getempert.

Die mechanischen Eigenschaften werden an Probekörpern aus 2 mm dicken Folien nach einer Heißluftlagerung von 48 Stunden bei 250°C bestimmt und mit jenen der 4 Stunden bei 200°C getemperten Vulkanisate verglichen. Die Ergebnisse finden sich in den entsprechenden Tabellen.

Tabelle 1

| Die Organopolysiloxanmasse enthält 5 ppm Cu und 5 ppm Zn, jeweils bezogen auf das Gesamtgewicht der Kautschukmasse, und keine 2-Ethylhexansäure, d.h. z=0 | | | | |
|---|---|---|---|---|
| Vernetzer | C2 | | C1 | |
| Zeit Temp. | 4h 200°C | 48h 250°C | 4h 200° | 48h 250°C |
| Shore A | 50 | 56 | 46 | 54 |
| RF [N/mm$^2$] | 12,8 | 7,9 | 12,8 | 7,0 |
| M 100% | 0,9 | 2,4 | 1,2 | 2,1 |
| M 300% | 2,6 | 7,2 | 4,4 | 5,8 |
| RD [%] | 540 | 320 | 670 | 350 |
| WRW [N/mm] | 37,6 | 18,9 | 26,3 | 20,3 |
| RPE [%] | 51 | 50 | 44 | 44 |
| Gew.-Verl. [%] | 0,85 | 1,78 | 0,82 | 1,78 |
| DVR [%] | 48/49 | 24/23 | 27/26 | 18/20 |
| Mooney | 53-47 | | | |

**Beispiel 2**

Tabelle 2

| Die Organopolysiloxanmasse enthält 10 ppm Cu und 10 ppm Zn, jeweils bezogen auf das Gesamtgewicht der Kautschukmasse, und keine 2-Ethylhexansäure, d.h. z=0 | | | | |
|---|---|---|---|---|
| Vernetzer | C2 | | C1 | |
| Zeit Temp. | 4h 200°C | 48h 250°C | 4h 200° | 48h 250°C |
| Shore A | 48 | 54 | 46 | 54 |
| RF [N/mm$^2$] | 12,9 | 7,6 | 12,6 | 7,1 |
| M 100% | 1,2 | 2,1 | 0,9 | 1,9 |
| M 300% | 4,2 | 6,7 | 2,5 | 5,4 |
| RD [%] | 560 | 330 | 670 | 370 |
| WRW [N/mm] | 27,5 | 19,0 | 34,3 | 20,9 |
| RPE [%] | 52 | 49 | 44 | 45 |
| Gew.-Verl. [%] | 0,88 | 1,70 | 0,89 | 1,75 |
| DVR [%] | 48/48 | 24/22 | 27/27 | 18/18 |
| Mooney | 51-46 | | | |

**Beispiel 3**

Tabelle 3

| Die Organopolysiloxanmasse enthält 10 ppm Cu, 10 ppm Zn, und 100 ppm 2-Ethylhexansäure, jeweils bezogen auf das Gesamtgewicht der Kautschukmasse | | | | |
|---|---|---|---|---|
| Vernetzer | C2 | | C1 | |
| Zeit Temp. | 4h 200°C | 48h 250°C | 4h 200° | 48h 250°C |
| Shore A | 41 | 47 | 42 | 45 |
| RF [N/mm$^2$] | 12,9 | 9,6 | 12,1 | 8,3 |
| M 100% | 0,8 | 1,4 | 0,7 | 1,2 |
| M 300% | 2,8 | 5,4 | 1,7 | 3,8 |
| RD [%] | 620 | 440 | 750 | 530 |
| WRW [N/mm] | 30,5 | 24,8 | 37,7 | 28,8 |

## EP 0 668 315 B1

Tabelle 3  (fortgesetzt)

| Die Organopolysiloxanmasse enthält 10 ppm Cu, 10 ppm Zn, und 100 ppm 2-Ethylhexansäure, jeweils bezogen auf das Gesamtgewicht der Kautschukmasse | | | | |
|---|---|---|---|---|
| Vernetzer | C2 | | C1 | |
| RPE [%] | 43 | 45 | 41 | 37 |
| Gew.-Verl. [%] | 1,51 | 1,73 | 1,50 | 1,62 |
| DVR [%] | 42/40 | 19/20 | 23/25 | 15/18 |
| Mooney | 35-33 | | | |

**Beispiel 4**

Tabelle 4

| Die Organopolysiloxanmasse enthält 20 ppm Cu, 20 ppm Zn, und 100 ppm 2-Ethylhexansäure, jeweils bezogen auf das Gesamtgewicht der Kautschukmasse | | | | |
|---|---|---|---|---|
| Vernetzer | C2 | | C1 | |
| Zeit Temp. | 4h 200°C | 48h 250°C | 4h 200° | 48h 250°C |
| Shore A | 46 | 51 | 44 | 48 |
| RF [N/mm$^2$] | 13,0 | 8,9 | 11,2 | 8,3 |
| M 100% | 1,0 | 1,9 | 0,8 | 1,5 |
| M 300% | 3,4 | 6,7 | 2,0 | 4,9 |
| RD [%] | 590 | 370 | 660 | 450 |
| WRW [N/mm] | 26,3 | 20,3 | 34,4 | 24,7 |
| RPE [%] | 49 | 49 | 46 | 42 |
| Gew.-Verl. [%] | 1,05 | 1,88 | 0,99 | 1,78 |
| DVR [%] | 43/44 | 18/19 | 23/23 | 16/14 |
| Mooney | 47-40 | | | |

**Beispiel 5**

Tabelle 5

| Die Organopolysiloxanmasse enthält 35 ppm Cu, 35 ppm Zn, und 100 ppm 2-Ethylhexansäure, jeweils bezogen auf das Gesamtgewicht der Kautschukmasse | | | | |
|---|---|---|---|---|
| Vernetzer | C2 | | C1 | |
| Zeit Temp. | 4h 200°C | 48h 250°C | 4h 200° | 48h 250°C |
| Shore A | 47 | 53 | 46 | 53 |
| RF [N/mm$^2$] | 13,4 | 8,3 | 18,8 | 7,9 |
| M 100% | 1,0 | 2,1 | 0,8 | 1,9 |
| M 300% | 3,6 | 6,8 | 2,3 | 5,9 |
| RD [%] | 610 | 350 | 680 | 380 |
| WRW [N/mm] | 29,3 | 18,8 | 34,7 | 20,5 |
| RPE [%] | 48 | 48 | 43 | 45 |
| Gew.-Verl. [%] | 0,86 | 1,48 | 0,92 | 1,31 |
| DVR [%] | 53/53 | 18/18 | 25/26 | 1 13/13 |
| Mooney | 48-45 | | | |

**Vergleichsbeispiel 1**

Tabelle 6

| Die Organopolysiloxanmasse enthält weder Cu noch Zn noch 2-Ethylhexansäure | | | | |
|---|---|---|---|---|
| Vernetzer | C2 | | C1 | |
| Zeit Temp. | 4h 200°C | 48h 250°C | 4h 200° | 48h 250°C |
| Shore A | 49 | 69 | 47 | 61 |
| RF [N/mm$^2$] | 11,4 | 4,2 | 12,2 | 4,0 |
| M 100% | 1,2 | - | 0,9 | - |
| M 300% | 4,4 | - | 2,6 | - |
| RD [%] | 512 | 70 | 670 | 70 |
| WRW [N/mm] | 28,8 | 5,1 | 35,6 | 6,3 |
| RPE [%] | 51 | 58 | 46 | 51 |
| Gew.-Verl. [%] | 1,12 | 2,39 | 1,03 | 2,14 |
| DVR [%] | 48/48 | 22/22 | 27/28 | 20/20 |
| Mooney | 59-53 | | | |

**Vergleichsbeispiel 2**

Tabelle 7

| Die Organopolysiloxanmasse enthält weder Cu noch Zn, jedoch 100 ppm 2-Ethylhexansäure, bezogen auf das Gesamtgewicht der Organopolysiloxanmasse. | | | | |
|---|---|---|---|---|
| Vernetzer | C2 | | C1 | |
| Zeit Temp. | 4h 200°C | 48h 250°C | 4h 200° | 48h 250°C |
| Shore A | 46 | 54 | 44 | 52 |
| RF [N/mm$^2$] | 11,3 | 6,8 | 11,1 | 5,4 |
| M 100% | 1,1 | 2,3 | 0,8 | 2,0 |
| M 300% | 4,1 | - | 2,2 | 5,2 |
| RD [%] | 530 | 300 | 680 | 300 |
| WRW [N/mm] | 26,0 | 19,9 | 34,3 | 18,8 |
| RPE [%] | 45 | 47 | 43 | 41 |
| Gew.-Verl. [%] | 1,10 | 1,53 | 1,08 | 1,44 |
| DVR [%] | 55/55 | 31/32 | 32/34 | 20/22 |
| Mooney | 51-46 | | | |

**Vergleichsbeispiel 3**

Tabelle 8

| Die Organopolysiloxanmasse enthält 10 ppm Cu, bezogen auf das Gesamtgewicht der Organopolysiloxanmasse, kein Zn und keine 2-Ethylhexansäure | | | | |
|---|---|---|---|---|
| Vernetzer | C2 | | C1 | |
| Zeit Temp. | 4h 200°C | 48h 250°C | 4h 200° | 48h 250°C |
| Shore A | 49 | 57 | 47 | 58 |
| RF [N/mm$^2$] | 11,9 | 6,7 | 12,2 | 6,0 |
| M 100% | 1,1 | 2,3 | 0,9 | 2,2 |
| M 300% | 4,2 | - | 2,6 | 5,8 |
| RD [%] | 520 | 290 | 650 | 310 |

Tabelle 8 (fortgesetzt)

| Die Organopolysiloxanmasse enthält 10 ppm Cu, bezogen auf das Gesamtgewicht der Organopolysiloxanmasse, kein Zn und keine 2-Ethylhexansäure | | | | |
|---|---|---|---|---|
| Vernetzer | C2 | | C1 | |
| WRW [N/mm] | 27,9 | 18,8 | 34,3 | 17,9 |
| RPE [%] | 52 | 49 | 46 | 45 |
| Gew.-Verl. [%] | 1,27 | 2,11 | 1,22 | 2,07 |
| DVR [%] | 41/41 | 18/19 | 25/23 | 16/17 |
| Mooney | 53-45 | | | |

**Vergleichsbeispiel 4**

Tabelle 9

| Die Organopolysiloxanmasse enthält 10 ppm Cu und 100 ppm 2-Ethylhexansäure, jeweils bezogen auf das Gesamtgewicht der Organopolysiloxanmasse, und kein Zn | | | | |
|---|---|---|---|---|
| Vernetzer | C2 | | C1 | |
| Zeit Temp. | 4h 200°C | 48h 250°C | 4h 200° | 48h 250°C |
| Shore A | 48 | 55 | 46 | 56 |
| RF [N/mm$^2$] | 13,2 | 7,2 | 12,3 | 6,4 |
| M 100% | 1,0 | 2,2 | 0,8 | 2,0 |
| M 300% | 3,6 | 6,5 | 2,2 | 5,5 |
| RD [%] | 590 | 340 | 700 | 350 |
| WRW [N/mm] | 28,2 | 19,4 | 33,4 | 20,7 |
| RPE [%] | 50 | 47 | 43 | 44 |
| Gew.-Verl. [%] | 0,97 | 1,97 | 0,88 | 2,18 |
| DVR [%] | 47/47 | 20/22 | 24/25 | 15/17 |
| Mooney | 49-44 | | | |

**Vergleichsbeispiel 5**

Tabelle 10

| Die Organopolysiloxanmasse enthält 10 ppm Zn, bezogen auf das Gesamtgewicht der Organopolysiloxanmasse, kein Cu und keine 2-Ethylhexansäure | | | | |
|---|---|---|---|---|
| Vernetzer | C2 | | C1 | |
| Zeit Temp. | 4h 200°C | 48h 250°C | 4h 200° | 48h 250°C |
| Shore A | 48 | 60 | 46 | 60 |
| RF [N/mm$^2$] | 11,9 | 6,5 | 11,8 | 4,7 |
| M 100% | 1,2 | 3,1 | 0,9 | 3,1 |
| M 300% | 4,3 | - | 2,4 | - |
| RD [%] | 530 | 210 | 680 | 150 |
| WRW [N/mm] | 26,7 | 11,9 | 34,8 | 9,2 |
| RPE [%] | 50 | 55 | 43 | 46 |
| Gew.-Verl. [%] | 1,15 | 1,79 | 1,17 | 1,71 |
| DVR [%] | 47/48 | 4/7 | 25/28 | 7/9 |
| Mooney | 49-46 | | | |

**Vergleichsbeispiel 6**

Tabelle 11

| Die Organopolysiloxanmasse enthält 10 ppm Zn und 100 ppm 2-Ethylhexansäure, jeweils bezogen auf das Gesamtgewicht der Organopolysiloxanmasse, und kein Cu | | | | |
|---|---|---|---|---|
| Vernetzer | C2 | | C1 | |
| Zeit Temp. | 4h 200°C | 48h 250°C | 4h 200° | 48h 250°C |
| Shore A | 51 | 66 | 49 | 65 |
| RF [N/mm$^2$] | 12,1 | 5,8 | 12,2 | 5,7 |
| M 100% | 1,3 | 4,9 | 1,0 | 4,7 |
| M 300% | 4,6 | - | 3,0 | - |
| RD [%] | 510 | 120 | 600 | 120 |
| WRW [N/mm] | 24,9 | 7,2 | 32,3 | 6,7 |
| RPE [%] | 51 | 61 | 43 | 51 |
| Gew.-Verl. [%] | 0,82 | 2,01 | 0,83 | 1,91 |
| DVR [%] | 46/47 | 18/20 | 29/34 | 17/18 |
| Mooney | 59-52 | | | |

**Beispiel 6**

Tabelle 12

| Die Organopolysiloxanmasse enthält 160 ppm Cu, 160 ppm Zn, und 100 ppm 2-Ethylhexansäure, jeweils bezogen auf das Gesamtgewicht der Kautschukmasse | | | | |
|---|---|---|---|---|
| Vernetzer | C2 | | C1 | |
| Zeit Temp. | 4h 200°C | 48h 250°C | 4h 200° | 48h 250°C |
| Shore A | 45 | 57 | 47 | 55 |
| RF [N/mm$^2$] | 12,5 | 5,3 | 12,3 | 5,3 |
| M 100% | 0,9 | 2,4 | 0,9 | 2,1 |
| M 300% | 2,9 | - | 2,4 | - |
| RD [%] | 630 | 230 | 660 | 280 |
| WRW [N/mm] | 32,0 | 14,4 | 32,6 | 18,4 |
| RPE [%] | 50 | 50 | 46 | 46 |
| Gew.-Verl. [%] | 0,86 | 2,33 | 0,84 | 1,99 |
| DVR [%] | 54/55 | 14/14 | 32/32 | 17/14 |
| Mooney | 54-46 | | | |

**Beispiel 7**

Nach der in Beispiel 1 beschriebenen Arbeitsweise wird eine HTV-Kautschukmasse hergestellt mit der Abänderung, daß anstelle von 2 Teilen einer wäßrigen Lösung der Übergangsmetallsalze $CuCl_2 \cdot 2\,H_2O$ und $ZnCl_2$ so viel Teile einer mit Kupfer und Zink dotierten hydrophilen Kieselsäure eingebracht werden, daß die in der Tabelle 13 angegebenen Konzentrationen an Cu und Zn in der Kautschukmasse erreicht werden.

Dabei werden 10,2 Teile einer mit 140 Gew.-ppm Cu und 140 Gew.-ppm Zn dotierten hydrophilen Kieselsäure gemäß der eingangs bereits zitierten deutschen Anmeldung mit dem Aktenzeichen P 43 36 345.8 mit 34,2 Teilen der oben beschriebenen pyrogen hergestellten Kieselsäure mit einer BET-Oberfläche von 300 m$^2$/g (käuflich erhältlich unter der Bezeichnung "HDK T 30" bei der Wacker-Chemie GmbH) abgemischt und diese Kieselsäure-Mischung wie in Beispiel 1 beschrieben in die Siloxanmischung eingearbeitet.

Tabelle 13 Die Organopolysiloxanmasse enthält 10 ppm Cu und 10 ppm Zn, jeweils bezogen auf das Gesamtgewicht der Kautschukmasse, und keine 2-Ethylhexansäure, d.h. z=0

| Vernetzer | C2 | | C1 | |
|---|---|---|---|---|
| Zeit Temp. | 4h 200°C | 48h 250°C | 4h 200° | 48h 250°C |
| Shore A | 46 | 51 | 45 | 50 |
| RF [N/mm$^2$] | 11,7 | 8,3 | 11,2 | 7,6 |
| M 100% | 1,0 | 1,9 | 0,8 | 1,6 |
| M 300% | 3,5 | 5,9 | 2,2 | 4,8 |
| RD [%] | 560 | 380 | 650 | 430 |
| WRW [N/mm] | 27,6 | 21,2 | 31,3 | 23,1 |
| RPE [%] | 47 | 47 | 43 | 41 |
| Gew.-Verl. [%] | 0,88 | 1,81 | 0,89 | 1,74 |
| DVR [%] | 46/45 | 15/17 | 19/21 | 15/16 |
| Mooney | 44-41 | | | |

**Beispiel 8**

Zunächst wird ein Stabilisatorkonzentrat bereitgestellt, indem analog der in Beispiel 1 beschriebenen Vorgehensweise eine peroxidfreie HTV-Kautschukmasse mit einem Gehalt an 1 000 Gew.-ppm Kupfer (als $CuCl_2 \cdot 2\,H_2O$), 1 000 Gew.-ppm Zink (als $ZnCl_2$) sowie 10 000 Gew.-ppm 2-Ethylhexansäure, jeweils bezogen auf das Gesamtgewicht des Stabilisatorkonzentrats, hergestellt wird.

1 Teil des so erhaltenen Stabilisatorkonzentrats zu 100 Teile einer gleichartigen HTV-Kautschukmischung ohne Hitzestabilisator wird zugefügt und die Mischung geteilt. Mit den beiden Teilen wird wie in Beispiel 1 beschrieben weiterverfahren.

Tabelle 14

| Die Organopolysiloxanmasse enthält 10 ppm Cu, 10 ppm Zn und 100 ppm 2-Ethylhexansäure, jeweils bezogen auf das Gesamtgewicht der Kautschukmasse | | | | |
|---|---|---|---|---|
| Vernetzer | C2 | | C1 | |
| Zeit Temp. | 4h 200°C | 48h 250°C | 4h 200° | 48h 250°C |
| Shore A | 46 | 52 | 45 | 52 |
| RF [N/mm$^2$] | 11,8 | 7,8 | 12,1 | 6,8 |
| M 100% | 1,0 | 2,0 | 0,9 | 1,8 |
| M 300% | 3,9 | 6,2 | 2,6 | 5,3 |
| RD [%] | 540 | 360 | 660 | 380 |
| WRW [N/mm] | 26,3 | 21,6 | 31,8 | 21,4 |
| RPE [%] | 51 | 48 | 47 | 42 |

Tabelle 14   (fortgesetzt)

| Die Organopolysiloxanmasse enthält 10 ppm Cu, 10 ppm Zn und 100 ppm 2-Ethylhexansäure, jeweils bezogen auf das Gesamtgewicht der Kautschukmasse | | | | |
|---|---|---|---|---|
| Vernetzer | | C2 | | C1 |
| Gew.-Verl. [%] | 1,01 | 1,81 | 0,94 | 1,72 |
| DVR [%] | 44/45 | 23/26 | 20/21 | 21/24 |
| Mooney | 45-42 | | | |

**Beispiel 9**

Die in Beispiel 1 beschriebene Verfahrensweise wird wiederholt mit der Abänderung, daß zusätzlich so viele Teile Zirkonium in Form von $ZrSiO_4$ eingebracht werden, daß die in Tabelle 15 angegebene Konzentration an Zirkonium erhalten wird.

**Tabelle 15** Die Organopolysiloxanmasse enthält 100 ppm Cu, 100 ppm Zn, 340 ppm Zr und 300 ppm 2-Ethylhexansäure, jeweils bezogen auf das Gesamtgewicht der Kautschukmasse

| Vernetzer | C2 | | C1 | |
|---|---|---|---|---|
| Zeit Temp. | 4h 200°C | 48h 250°C | 4h 200° | 48h 250°C |
| Shore A | 38 | 49 | 40 | 45 |
| RF [N/mm$^2$] | 11,3 | 6,9 | 10,5 | 6,4 |
| M 100% | 0,7 | 1,5 | 0,7 | 1,3 |
| M 300% | 2,0 | 4,6 | 1,7 | 4,0 |
| RD [%] | 690 | 400 | 720 | 450 |
| WRW [N/mm] | 30,9 | 21,5 | 33,6 | 23,7 |
| RPE [%] | 38 | 40 | 41 | 36 |
| Gew.-Verl. [%] | 1,01 | 2,08 | 1,00 | 1,91 |
| DVR [%] | 45/44 | 19/18 | 28/30 | 17/17 |
| Mooney | 51-41 | | | |

**Beispiel 10**

Die in Beispiel 1 beschriebene Verfahrensweise wird wiederholt mit der Abänderung, daß zusätzlich so viele Teile Zirkonium in Form von $ZrSiO_4$ eingebracht werden, daß die in Tabelle 16 angegebene Konzentration an Zirkonium erhalten wird.

Tabelle 16

| Die Organopolysiloxanmasse enthält 100 ppm Cu, kein Zn, 100 ppm Zr und 200 ppm 2-Ethylhexansäure, jeweils bezogen auf das Gesamtgewicht der Kautschukmasse | | | | |
|---|---|---|---|---|
| Vernetzer | C2 | | C1 | |
| Zeit Temp. | 4h 200°C | 48h 250°C | 4h 200° | 48h 250°C |
| Shore A | 47 | 52 | 49 | 53 |
| RF [N/mm$^2$] | 13,0 | 6,7 | 12,8 | 8,1 |
| M 100% | 1,0 | 2,0 | 1,0 | 1,9 |
| M 300% | 3,3 | 5,7 | 2,9 | 5,3 |
| RD [%] | 630 | 350 | 640 | 420 |
| WRW [N/mm] | 31,4 | 21,7 | 33,0 | 24,0 |
| RPE [%] | 46 | 44 | 45 | 44 |
| Gew.-Verl. [%] | 1,02 | 1,76 | 1,00 | 1,59 |
| DVR [%] | 51/51 | 21/21 | 30/31 | 17/17 |
| Mooney | 54-47 | | | |

**Patentansprüche**

1.  Hitzestabilisierte, zu Elastomeren vernetzbare Organopolysiloxanmassen, die als Stabilisatorkombination

    (D) Kupferverbindung in einer Menge von 1 bis 180 Gew.-ppm berechnet als elementares Kupfer und
    (E) Zinkverbindung in einer Menge von 1 bis 180 Gew.-ppm berechnet als elementares Zink, jeweils bezogen auf das Gesamtgewicht der hitzestabilisierten, zu Elastomeren vernetzbaren Organopolysiloxanmasse,

    enthalten.

2.  Organopolysiloxanmassen gemäß Anspruch 1, dadurch gekennzeichnet, daß sie

    (A) Organopolysiloxane aus Einheiten der allgemeinen Formel

    $$R_a SiO_{\frac{4-a}{2}} \tag{I},$$

    worin

    R   gleich oder verschieden sein kann und gegebenenfalls substituierter Kohlenwasserstoffrest bedeutet und
    a   0, 1, 2 oder 3 ist und einen durchschnittlichen Zahlenwert von 1,9 bis 2,1 hat, und

    (C) die Vernetzung der Organopolysiloxanmassen fördernden Katalysator und/oder die Vernetzung bewirkendes Agens, wie beispielsweise organisches Peroxid,

    enthalten.

3.  Organopolysiloxanmassen gemäß Anspruch 1 oder 2, dadurch gekennzeichnet, daß es sich um einkomponentige, peroxidisch vernetzbare Organopolysiloxanmassen handelt.

4.  Organopolysiloxanmassen gemäß einem oder mehreren der Ansprüche 1 bis 3, dadurch gekennzeichnet, daß es sich bei Komponente (D) und (E) um mit Zink und Kupfer dotierte Kieselsäure handelt.

5.  Organopolysiloxanmassen gemäß einem oder mehreren der Ansprüche 1 bis 4, dadurch gekennzeichnet, daß sie (F) organische Fettsäure enthalten.

6.  Verfahren zur Herstellung der hitzestabilisierten, zu Elastomeren vernetzbaren Organopolysiloxanmassen gemäß Anspruch 1, dadurch gekennzeichnet, daß die einzelnen Komponenten miteinander vermischt werden.

7. Verfahren gemäß Anspruch 6, dadurch gekennzeichnet, daß Komponente (D) und (E) in Form eines Stabilisatorkonzentrats zugegeben werden, welches Kupferverbindung in einer Menge von mehr als 180 ppm berechnet als elementares Kupfer, Zinkverbindung in einer Menge von mehr als 180 ppm berechnet als elementares Zink, jeweils bezogen auf das Gesamtgewicht des Stabilisatorkonzentrats, sowie Organopolysiloxan enthält.

8. Hitzestabilisierte Elastomere erhältlich durch Vernetzung der Organopolysiloxanmassen gemäß Anspruch 1.

## Claims

1. Organopolysiloxane compositions which are stabilized to heat and can be crosslinked to give elastomers, which compositions contain as stabilizer combination

   (D) a copper compound in an amount of from 1 to 180 ppm by weight calculated as elemental copper and
   (E) a zinc compound in an amount of from 1 to 180 ppm by weight calculated as elemental zinc, in each case based on the total weight of the organopolysiloxane composition which is stabilized to heat and can be crosslinked to give elastomers.

2. Organopolysiloxane compositions according to Claim 1, characterized in that they comprise

   (A) organopolysiloxanes comprising units of the general formula

   $$R_a SiO_{\frac{4-a}{2}} \qquad (I),$$

   where

   R   can be identical or different on each appearance and is an unsubstituted or substituted hydrocarbon radical and
   a   is 0, 1, 2 or 3 and has an average numerical value of from 1.9 to 2.1, and

   (C) a catalyst promoting the crosslinking of the organopolysiloxane compositions and/or an agent effecting the crosslinking, such as, for example, an organic peroxide.

3. Organopolysiloxane compositions according to Claim 1 or 2, characterized in that they are single-component, peroxidically-crosslinkable organopolysiloxane compositions.

4. Organopolysiloxane compositions according to one or more of Claims 1 to 3, characterized in that the components (D) and (E) are silica doped with zinc and copper.

5. Organopolysiloxane compositions according to one or more of Claims 1 to 4, characterized in that they contain (F) organic fatty acid.

6. Process for preparing organopolysiloxane compositions according to Claim 1 which are stabilized to heat and can be crosslinked to give elastomers, characterized in that the individual components are mixed with one another.

7. Process according to Claim 6, characterized in that components (D) and (E) are added in the form of a stabilizer concentrate containing a copper compound in an amount of more than 180 ppm calculated as elemental copper, a zinc compound in an amount of more than 180 ppm calculated as elemental zinc, in each case based on the total weight of the stabilizer concentrate, and also an organopolysiloxane.

8. Elastomers which are stabilized to heat and can be obtained by crosslinking of the organopolysiloxane compositions according to Claim 1.

**Revendications**

1. Compositions d'organopolysiloxanes réticulables en élastomères, stabilisées à la chaleur, qui contiennent comme combinaison de stabilisation

   (D) un composé du cuivre en une quantité de 1 à 180 ppm en poids, calculé sous forme de cuivre élémentaire, et
   (E) un composé du zinc en une quantité de 1 à 180 ppm en poids, calculé sous forme de zinc élémentaire, chaque fois sur la base du poids total des compositions d'organopolysiloxanes réticulables en élastomères, stabilisées à la chaleur.

2. Compositions d'organopolysiloxanes suivant la revendication 1, caractérisées en ce qu'elles contiennent

   (A) des organopolysiloxanes d'unités de formule générale

$$R_aSiO_{(4-a)/2} \qquad (I)$$

   où

   R peut être identique ou différent et représente un radical hydrocarbure facultativement substitué, et
   a est 0, 1, 2 ou 3 et a une valeur numérique moyenne de 1,9 à 2,1, et

   (C) un catalyseur activant la réticulation des compositions d'organopolysiloxanes et/ou un agent provoquant la réticulation, comme par exemple, un peroxyde organique.

3. Compositions d'organopolysiloxanes suivant la revendication 1 ou 2, caractérisées en ce qu'il s'agit de compositions d'organopolysiloxanes à un composant, réticulables par un peroxyde.

4. Compositions d'organopolysiloxanes suivant l'une ou plusieurs des revendications 1 à 3, caractérisées en ce qu'il s'agit, pour les composants (D) et (E), d'acide silicique dopé de zinc et de cuivre.

5. Compositions d'organopolysiloxanes suivant l'une ou plusieurs des revendications 1 à 4, caractérisées en ce qu'elles contiennent (F) un acide gras organique.

6. Procédé de préparation de compositions d'organopolysiloxanes réticulables en élastomères, stabilisées à la chaleur, suivant la revendication 1, caractérisé en ce que les composants individuels sont mélangés les uns avec les autres.

7. Procédé suivant la revendication 6, caractérisé en ce que les composants (D) et (E) sont ajoutés sous forme d'un concentré de stabilisation, lequel contient le composé du cuivre en une quantité de plus de 180 ppm en poids, calculé sous forme de cuivre élémentaire et le composé du zinc en une quantité de plus de 180 ppm en poids, calculé sous forme de zinc élémentaire, chaque fois sur base du poids total du concentré de stabilisation, ainsi que de l'organopolysiloxane.

8. Elastomère stabilisé à la chaleur, pouvant être obtenu par réticulation des compositions d'organopolisiloxanes suivant la revendication 1.